# DEMANDE DE BREVET EUROPEEN

(11) **EP 2 000 957 A1**
(43) Date de publication de la demande: **10.12.2008**
(21) Numéro de dépôt: 07301056.3
(22) Date de dépôt: 21.05.2007
(51) Int. Cl.: G06K 19/077

(54) **Procédé de réalisation d'un dispositif comportant une antenne de transpondeur radiofréquence avec deux portions terminales réalisées sur un support et dispositif obtenu**

(71) Demandeur: GEMPLUS, 13420 Gémenos (FR); Axalto S.A., 92190 Meudon (FR)
(72) Inventeur: Martinent, Jean-François, 13090 Aix en Provence (FR); Robles, Laurence, 83640 Saint Zacharie (FR); Roussel, François, 92330 Sceaux (FR)

(57) **Abrégé**

L'invention concerne un procédé de réalisation d'un dispositif comportant une antenne de transpondeur radiofréquence, ledit procédé comprenant une étape de réalisation de l'antenne avec deux portions terminales (15, 17) sur un support par une technique filaire,

Le procédé se distingue en ce qu'il comprend une étape de réalisation d'un point d'arrêt (9) de fil d'antenne en bout de l'une au moins des dites portions terminales (5, 15, 17).

L'invention concerne également le dispositif obtenu.

## Description

L'invention concerne un procédé de réalisation d'un dispositif comportant une antenne de transpondeur radiofréquence, ledit procédé comprenant une étape de réalisation de l'antenne avec deux portions terminales sur un support par technique filaire.

En particulier, l'invention vise la réalisation de carte à puce sans contact et /ou de document de voyage tel que passeport électronique, de visa électronique, étiquette électronique, un insert ou "inlay", tout produit électronique de communication radiofréquence destiné à comporter une connexion d'un module à une antenne.

Parmi les procédés de réalisation de transpondeur, on connaît l'usage d'antenne filaire disposée dans un corps de carte en matière plastique par une technologie d'incrustation de fil par ultra sons. Le module est ensuite connecté par soudure thermo-compression avec le même fil d'antenne à des plages ou plots de connexion d'un composant électronique.

Pour la soudure, le fil conducteur est mis en contact avec les plages de contact d'un module ou plots de connexion d'une puce électronique et une sonde de thermo-compression est appliquée sur le fil, contre la plage ou le plot.

On connaît aussi le recours à des techniques de réalisation d'antenne filaire venant du domaine textile tel que la couture, broderie... qui utilise un support textile ou fibreux.

Cette dernière technique expérimentée par les inventeurs, a révélé la nécessité de mettre en oeuvre des débuts et/ou des fins de broderie ou de couture qui doivent être stoppés notamment par plusieurs passages des fils ou aiguilles au même endroit. Ces points sont effectués de manière à permettre notamment à tirer sur les fils avant et/ou pour leur coupe et de les stabiliser sur le support.

Ces points d'arrêt créent soit une surépaisseur de 200 à 600 µm le fil conducteur étant de l'ordre de 100µm, et/ou un bout de fil résiduel « en l'air » dommageables pour les étapes ultérieures notamment de lamination ou pour la caractéristique radiofréquence de l'antenne; Cela peut aussi gêner l'esthétique du support et la connexion d'un module.

Selon un mode de réalisation de l'invention, pour des facilité de mise en oeuvre du fil d'antenne brodée, ce dernier est une association ou combinaison d'un ou plusieurs fils conducteurs avec un ou plusieurs autres fils en fibres synthétiques (PA : polyamide, coton, PES : polyester). Lors de la connexion des fils au module par thermo-compression en appuyant sur le fil avec la sonde, notamment réalisée de manière classique, Les inventeurs ont constaté un endommagement de l'outil de soudure, ce dernier étant pollué par les fibres non conductrices.

L'invention a pour objectif de résoudre les problèmes susvisés rencontrés dans le développement d'une nouvelle technologie d'antenne de transpondeur industrialisable bas coût, en particulier le problème de surépaisseur de fil et de pollution de l'outil de soudure.

Le premier problème est résolu dans la réalisation de points d'arrêt en début et/ou fin de parcours d'antenne; puis l'élimination de la surépaisseur et/ou bout de fil résiduel flottant en l'air.

Le second problème est résolu en proposant une autre construction du dispositif et report module qui permette une soudure dans le sens sonde de soudure / plages de connexion du module / fil conducteur.

A cet effet, l'invention a pour objet un procédé de réalisation d'un dispositif comportant une antenne de transpondeur radiofréquence, ledit procédé comprenant une étape de réalisation de l'antenne avec deux portions terminales sur un support par technique filaire;

Le procédé se distingue en ce qu'il comprend une étape de réalisation d'un point d'arrêt de fil d'antenne en bout de l'une au moins des dites portions terminales.

Grâce à cette étape, le fil d'antenne est stabilisé, et le tirage et coupe du fil peuvent s'effectuer correctement à cadence élevée.

Selon d'autres caractéristiques du procédé :
- ledit procédé comprend une étape d'élimination dudit point d'arrêt, supprimant ainsi les problèmes de surépaisseur et de fil en l'air;
- l'étape d'élimination comprend une élimination de matière du support en regard du point d'arrêt et formation d'une cavité, permettant ainsi l'insertion d'un module dans la cavité et une réduction de l'épaisseur de l'ensemble;
- les portions terminales de l'antenne ou points d'arrêt sont superposés ou réalisées dans une zone du support destinée à être éliminée, permettant ainsi une préparation nette des extrémités terminales d'antenne à connecter en plus d'un logement partiel de module;
- le point d'arrêt est choisi parmi un point d'arrêt de couture, de broderie, tricotage, qui sont des techniques filaires permettant des cadences élevées;
- on reporte des plages conductrices en regard des dites portions terminales et on connecte lesdites plages de contact aux portions de fil terminales par soudure par transfert d'énergie à travers lesdites plages de contact; cette disposition évite ainsi de souiller l'outil de soudure;
- un composant électronique est fixé aux plages de contact, les plages étant préalablement connectées à l'antenne ou préalablement au composant comme un module;
- le composant est disposé au moins en partie dans ladite cavité;
- le support comprend un tissu et une étape de fixation d'un matériau stabilisant, renforçant le tissu.

L'invention a également pour objet un dispositif comportant une antenne de transpondeur radiofréquence ladite antenne étant réalisée en ayant deux portions terminales sur un support;

Le dispositif se distingue en ce que l'une au moins des dites portions s'étend jusqu'au bord d'une cavité, permettant ainsi une préparation nette des extrémités d'antenne pour une bonne connexion et positionnement précis d'un module ou puce avec ses plages de contact dans la cavité.

Ainsi, les plages de contact n'ont pas besoin de s'étendre beaucoup sur le substrat, l'extrémité d'antenne étant localisée précisément jusqu'au bord.

Cet avantage de positionnement précis de composant à connecter relativement aux extrémités d'antenne est applicable quelle que soit la technique de réalisation d'antenne mise en oeuvre: filaire, broderie, gravure, sérigraphie, etc. Le composant étant positionné dans la cavité, les extrémités d'antenne se trouvent nécessairement sur le bord puisque une opération d'élimination au moins d'une partie d'antenne et/ou du support au niveau d'une zone de report de puce ou de module, définit de nouvelles extrémités au bord de la zone d'élimination.

On peut aussi adapter les dimensions du composant à une zone de report et/ou de réception (cavité) aussi proche que possible des portions terminales de l'antenne qui sont définies après réalisation de l'antenne.

De la sorte, l'invention a conduit également à un procédé de positionnement précis et adaptation aux dimensions d'un composant à connecter par rapport à des portions terminales d'antennes et au produit obtenu.

L'invention a également pour objet un produit électronique de communication radiofréquence, tel une carte à puce sans contact, un passeport, un insert comprenant le dispositif ci-dessus.

D'autres particularités et avantages de l'invention apparaîtront à la lecture de la description, qui suit, donnée à titre d'exemple illustratif et non limitatif, et faite en référence aux figures annexées pour lesquelles :
- la figure 1 illustre une vue schématique d'un dispositif à antenne de transpondeur selon un mode de mise en oeuvre du procédé de l'invention ;
- la figure 2 et 2C illustrent deux vues schématiques correspondantes d'un dispositif à antenne de transpondeur selon un second mode de mise en oeuvre du procédé de l'invention ;
- les figures 3 et 3C illustrent une étape du procédé comprenant l'élimination du point d'arrêt des figures précédentes et formation de cavité à la place;
- les figures 4 et 4C illustrent une étape du procédé selon le second mode comprenant le report et connexion d'un module dans le dispositif de la figure précédente ;
- les figures 5, 6, 7, 8 illustrent un troisième mode de mise en oeuvre de l'invention à l'échelle industrielle;
- la figure 9 illustre un autre mode de report et connexion d'un module de l'invention.

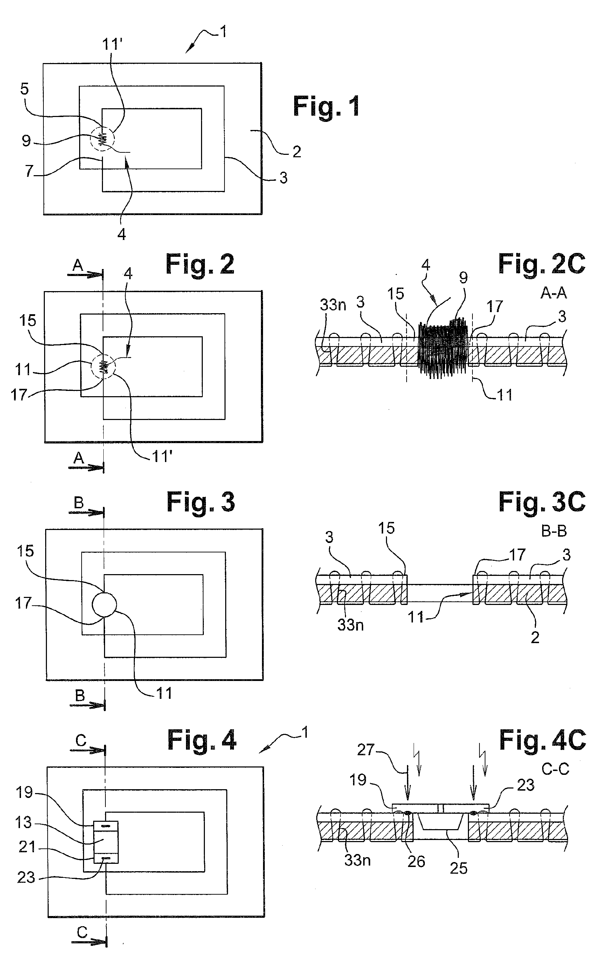

Comme le montre la figure 1, un dispositif 1 conforme à un mode de réalisation de l'invention comporte une antenne de transpondeur radiofréquence 3, réalisée avec deux portions terminales 5, 7 sur un support 2 par une technique filaire. Les spires d'antenne comprennent ou constitue un fil conducteur dont les caractéristiques sont adaptées à une communication radiofréquence. Ce dispositif est amené à être un produit électronique de communication radiofréquence, tel une carte à puce sans contact, un passeport, ou sous produit tel un insert (dit inlay sans contact).

Dans l'exemple, le dispositif 1 constitue un insert ou "inlay", et le fil, fixé par une technique de broderie, comporte de préférence une gaine isolante lui permettant d'effectuer des croisements sur d'autres spires sans court-circuit.

Une portion terminale 7 de début de circuit d'antenne a démarré sans point d'arrêt mais se termine avec point d'arrêt 9 et le cas échéant un bout de fil en l'air 4. Ce point est en cas de besoin destiné à être enlevé notamment par poinçonnage.

Dans une variante non décrite un module peut être connecté d'une part à la portion 7 d'autre part au point d'arrêt 9 ou en amont du point d'arrêt.

A la figure 2, 2C un autre mode de réalisation, le point de départ 15 et point de fin 17 de l'antenne parviennent dans une même zone 11 destinée à être enlevée.

Lorsque le point est enlevé notamment par poinçonnage, figure 3, 3C, le dispositif comporte selon une caractéristique, au moins une portion terminale 5 qui s'étend jusqu'au bord de la cavité 11 pour le mode de la figure 1 et deux portions 15, 17 pour celui de la figure 2.

A la figure 4, 4C le dispositif à antenne 1 est plus avancé et comprend un composant électronique 13 connecté aux plages de contact.

Des plages conductrices 19, 21 sont connectées par soudure 26 aux portions terminales de fil par transfert d'énergie à travers lesdites plages de contact, qui comportent une marque 23 résultant de la pression et activation d'un l'outil de soudure 27.

Selon un mode préféré, le composant électronique est disposé au moins en partie dans la cavité 11. Ici au moins une puce électronique et son enrobage 25 sont disposés dans la cavité.

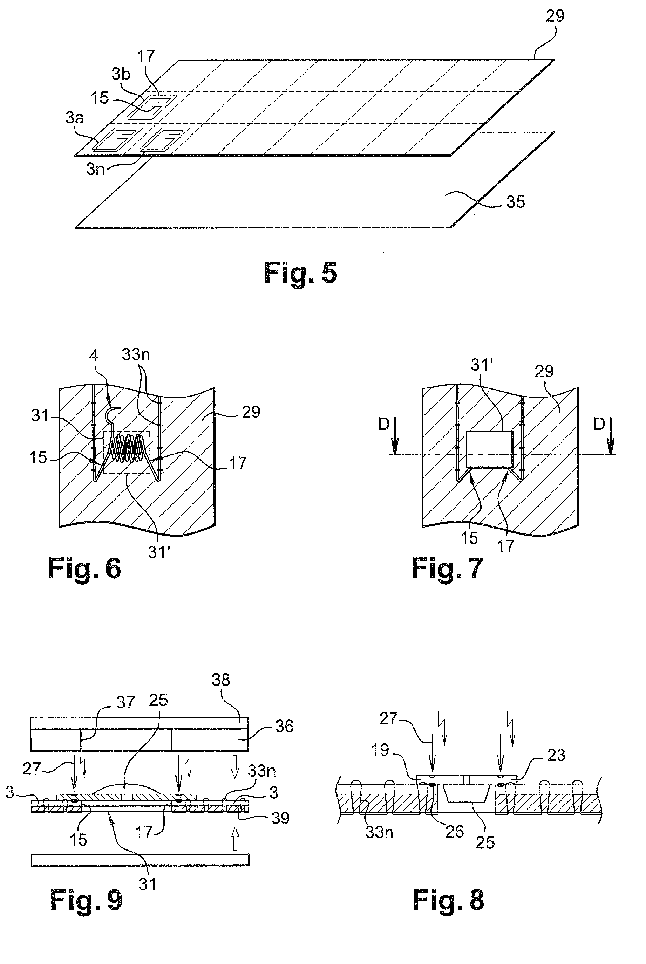

Toutefois, le composant pourrait être disposé hors de la cavité, par exemple en mettant l'enrobage du module orienté à l'opposé du substrat (fig.9).

Le composant peut être un module électronique 3 disposés sur un substrat 4.

Le composant dans l'exemple est un module électronique du type sans contact comportant un film support, type circuit imprimé, doté d'une puce de circuit intégré fixée sur le film support et connecté par fil soudé ou selon une technique type flip-chip (puce retournée et connectée avec une colle conductrice), aux plages de contact s'étendant de part et d'autre du film support.

Le module peut être réalisé sans film support diélectrique.

Un enrobage 25 avec une résine de protection peut venir couvrir la puce et ses contacts.

On décrit maintenant un mode préféré de mise en oeuvre du procédé de réalisation de dispositif à antenne de transpondeur radiofréquence.

A la figure 5, le procédé comprend la fourniture d'un substrat 29 comportant des fibres tel un tissu ou un non tissé très fin de l'ordre de .80 à 300 µm d'épaisseur (par exemple un tissu comportant des fils chaîne et trame de 48 dtex avec un maillage de l'ordre de 200 µm) et qui possède des dimensions permettant de réaliser une pluralité d'antenne 3a-3n en même temps.

Cependant, ne sont pas exclus d'autres substrats isolants qui peuvent être par exemple un film ou feuille en matériau polymère, en PVC, PET (polyéthylène), papier, polyimide, cuir synthétique, matériau apte à être cousu ou brodé.

Le substrat peut avoir différentes épaisseurs, généralement inférieures ou égales à celle d'une carte à puce de 0,76 mm de manière le cas échéant à servir d'insert entre deux films ou feuilles ou servir de support à une feuille de couverture et/ou d'impression. Typiquement le substrat peut avoir une épaisseur allant par exemple de 0,1 mm à 0,5 mm.

Le procédé comprend une étape de formation de l'antenne ou pluralité d'antennes sur le substrat, ladite antenne comportant deux portions terminales de connexion 15, 17, par une technique filaire,

Selon une caractéristique du mode de mise en oeuvre, on réalise des points d'arrêt de fil d'antenne en bout de l'une au moins des dites portions terminales.

Dans l'exemple (figure 6), les portions terminales 15, 17 de l'antenne ou points d'arrêt sont superposés ou réalisées dans une zone 31 du support destinée à être éliminée.

Le point d'arrêt est choisi parmi un point d'arrêt de couture, de broderie, tricotage en fonction de la technique utilisée pour réaliser l'antenne. En l'occurrence, on utilise la broderie. Un fil de fixation 33 lie le fil d'antenne au support à différents endroits 33a - 33n. Le point peut comporter plusieurs passages et/ou superposition au même endroit de fils d'antenne et fil de fixation.

Le maniement du tissu support d'une antenne brodée étant très délicat (matériau tissé souple et poreux). On procède à la fixation d'un matériau stabilisant, renforçant le tissu. Le support est de préférence associé à une feuille 35 lui conférant plus de tenue et de stabilité dimensionnelle et facilite le maniement de l'ensemble substrat, antennes.

De préférence, l'adjonction de la feuille de renfort est effectuée après la réalisation de l'antenne mais pourrait être réalisée avant. Si réalisé au préalable, il pourrait y avoir des difficultés pour coudre ou broder et une baisse de productivité ou performance.

Un effet semblable à l'ajout d'une feuille peut être obtenu par imprégnation ou enduction d'une couche ou pulvérisation d'un produit tel un enduit, un apprêt, une résine, une mousse polymère, une gomme, apte à stabiliser dimensionnellement le substrat.

L'assemblage peut être réalisé par soudure thermique (fusion des matériaux) ou addition d'un adhésif (en film, liquide).

Cette étape permet également de conférer une épaisseur de compensation au substrat permettant de recevoir une partie d'un composant dans le support lors du report de ce dernier.

A l'étape suivante, selon une caractéristique, on procède à l'élimination dudit point d'arrêt (figure 7).

Cette élimination est réalisée de préférence par poinçonnage du support au niveau du point et/ou bout de fil en l'air 4, et comprend de ce fait une élimination de la matière du support en regard du point d'arrêt et formation d'une cavité 31 mais elle peut être réalisée par tout autre moyen connu d'usinage, perçage d'un trou, ablation laser du point avec ou sans enlèvement de matière du support.

A l'étape suivante (figure 7), selon une caractéristique, on reporte des plages conductrices en regard des dites portions terminales et on connecte lesdites plages de contact aux portions de fil terminales par soudure par transfert d'énergie à travers lesdites plages de contact.

Dans l'exemple, le composant électronique est au préalable fixé aux plages de contact 19, 21 qui font partie d'un module électronique. Toutefois, il est possible dans de reporter uniquement des métallisations ou plages de contact, pastilles, sur le substrat de manière à pouvoir les connecter aux portions terminales de l'antenne, et ensuite venir reporter un composant tel une puce électronique que l'on connecte ensuite à ces plages.

Lors du report de composant, ce dernier est de préférence disposé au moins en partie dans ladite cavité formée; en particulier, la puce enrobée 25 est logée dans la cavité 31 tandis que les plages viennent en surface du substrat en regard des portions terminales de connexion de l'antenne.

A l'étape suivante, on réalise de préférence la connexion de ces parties terminales de l'antenne aux plages de contact. Cette connexion s'effectue de préférence par une sonde 27, de type thermo compression appliquée sur la plage de contact, laquelle est pressée contre la portion de fil terminale.

On peut éventuellement utiliser d'autres moyens de soudage comme une sonde à ultra-sons, ou arc électrique voire matière conductrice adhésive si les fils d'antenne sont dénudés à l'endroit de connexion.

Le fil conducteur d'une antenne brodée étant une combinaison du matériau conducteur et d'un ou plusieurs autres fibres synthétiques (PA, coton, PES), la connexion module avec le fil d'antenne brodée doit se faire dans le sens sonde de thermo compression / plages de connexion du module / fil brodé afin d'obtenir une connexion sans endommager l'outil de soudure.

La soudure utilise de préférence une enclume (non représentée) qui vient exercer un appui contre l'enfoncement de la portion terminale de l'antenne dans le support; l'enclume transperce au moins la feuille ou couche de renfort en regard de la portion terminale à connecter de manière que la portion à connecter soit supportée par l'enclume pendant la soudure; L'enclume ou aiguille peut avoir une section rectangulaire ou carrée par exemple comprise entre 0,3 x 1 mm² à 1 x 5 mm².

Dans le cas où, une puce est reportée et connectée aux plages par exemple par "flip-chip" (connexion puce retournée), il peut y avoir une étape de dépôt d'enrobage subséquent.

A la figure 9, une variante de mise en oeuvre consiste à reporter un module sans le disposer dans la cavité d'extraction du point d'arrêt, mais au dessus ou à distance de la cavité, le substrat étant trop fin à ce stade pour le loger dans la cavité formée.

Au moins un film de compensation 36, 38 avec cavité de logement 37 de tout ou partie du module est ajouté par dessus le module. De même au moins une feuille de couverture peut venir compléter le dispositif à antenne.

A la fin du procédé de connexion, l'ensemble est découpé au format voulu le long des pointillés avant ou après avoir reçu des éventuellement les feuilles de couverture ou de compensation, ou de renfort.

Le cas échéant, les feuilles 35, 36, 38, peuvent comprendre un matériau apte à absorber les chocs ou une certaine déformation lors des laminations ou lors d'utilisation et peuvent ne pas comprendre de cavité dans ce cas.

## Revendications

1. Procédé de réalisation d'un dispositif comportant une antenne de transpondeur radiofréquence, ledit procédé comprenant une étape de réalisation de l'antenne avec deux portions terminales (15, 17) sur un support par une technique filaire,
**caractérisé en ce qu'**il comprend une étape de réalisation d'un point d'arrêt (9) de fil d'antenne en bout de l'une au moins des dites portions terminales (5, 15, 17).

2. Procédé selon la revendication 1, **caractérisé en** en ce que ledit procédé comprend une étape d'élimination dudit point d'arrêt (9).

3. Procédé selon la revendication 2, **caractérisé en ce que** l'étape d'élimination comprend une élimination de matière du support (2, 29, 39) en regard du point d'arrêt et formation d'une cavité (11, 31).

4. Procédé selon l'une des revendications 2 ou 3, **caractérisé en ce que** les portions terminales de l'antenne ou points d'arrêt sont superposés ou réalisés dans une zone du support (11',31') destinée à être éliminée.

5. Procédé selon l'une des revendications précédentes, **caractérisé en ce que** le point d'arrêt est choisi parmi un point d'arrêt de couture, de broderie, tricotage.

6. Procédé selon l'une des revendications précédentes, **caractérisé en ce que** l'on reporte des plages conductrices (19, 21) en regard des dites portions terminales et on connecte lesdites plages de contact aux portions terminales (15, 17) de fil par soudure par transfert d'énergie à travers lesdites plages de contact.

7. Procédé selon l'une des revendications précédentes, **caractérisé en ce qu'**un composant électronique est fixé aux plages de contact.

8. Procédé selon les revendications 3 et 7, **caractérisé en ce que** le composant est disposé au moins en partie dans ladite cavité (11, 31).

9. Procédé selon l'une des revendications précédentes, **caractérisé en ce que** le support comprend un tissu et une étape de fixation d'un matériau stabilisant, renforçant le tissu.

10. Dispositif comportant une antenne de transpondeur radiofréquence, ladite antenne (3) étant réalisée avec deux portions terminales (15, 17) sur un support,
**caractérisé en ce que** l'une au moins des dites portions (5, 15, 17) s'étend jusqu'au bord d'une cavité (11, 31).

11. Dispositif selon la revendication 10, **caractérisé en ce que** des plages conductrices (19, 21) sont connectées par soudure (26) aux portions terminales par transfert d'énergie à travers lesdites plages de contact.

12. Dispositif selon l'une des revendications 10 ou 11, **caractérisé en ce qu'**il comprend un composant électronique connecté aux plages de contact.

13. Dispositif selon la revendication précédente, **caractérisé en ce que** le composant électronique est disposé au moins en partie (25) dans ladite cavité (11, 31).

14. Produit électronique de communication radiofréquence, tel une carte à puce sans contact, un passeport, un insert obtenu selon le procédé des revendications 1 à 9 ou comprenant le dispositif selon l'une des revendications 10 à 13.
